# EUROPEAN PATENT APPLICATION

(11) **EP 1 397 959 A2**
(43) Date of publication of application: **17.03.2004**
(21) Application number: 03077618.1
(22) Date of filing: 21.08.2003
(51) Int. Cl.: A23G 1/00

(54) **Candy product**

(30) Priority: 03.12.2002 US 308841; 12.09.2002 US 242198
(71) Applicant: Candy Novelty Works Ltd., Kowloon, Hong Kong (CN)
(72) Inventor: Chan, Pak Nin, Hong Kong (CN)
(74) Representative: Hylarides, Paul Jacques

(57) **Abstract**

A container (12) that simulates the cone portion of an ice cream cone is filled with a particulate candy (60). The base (28) of a top member (14) is connected to the upper end of the container (12). A hard candy member (16) is formed on a tubular member (32) that extends upwardly from the base (28) of the top member (30). The hard candy member (16) is shaped to simulate the ice cream portion of an ice cream cone. The tubular member (32) is initially closed at its top by a top portion (54) of the hard candy member (16). The hard candy member (16) is licked, sucked and/or chewed upon. When the upper end portion (54) of the hard candy member (16) is consumed, the upper end (56) of the tubular member (32) becomes open. This allows the candy product (10) to be manipulated for the purpose of moving particulate candy (60) out from the container (12), through the tubular member (32) into a person's mouth.

## Description

### Technical Field

This invention relates to a candy product and, more particularly, to a candy sucker composed of a hard candy member that forms a closure for an outlet for a chamber in which a particulate candy is stored, whereby consumption of the closure portion of the hard candy opens the outlet and permits the flow of particulate candy out from the chamber.

### Background of the invention

"Suckers" or "lollipops" are a very well known candy product. A "sucker" or "lollipop" is basically characterized by a handle that is held by a person and a body of hard candy on the handle that is consumed by licking, sucking and/or biting. United States Patent No. 6,345,977, granted February 12, 2002, to Pak Nin Chan relates to a "sucker" or "lollipop" comprising a ball of hard candy on an edible stick. An object of the present invention is to provide a "sucker" or "lollipop" having a body of hard candy that is on top of a handle that is hollow and contains a particulate candy within an inner chamber. Another object of the invention is to provide such a "sucker" or "lollipop" that is in the form of a simulated ice cream cone.

### Brief Summary of the Invention

The candy product of the present invention is characterized by a container that is shaped and sized to be grasped by a person's hand. The container includes an inner chamber and an upper end portion having an upper end opening. The base of a top member is connected to the upper end portion of the container. A tubular member extends upwardly from the base and includes an upper end and a lower end that communicates with the inner chamber in said container. A particulate candy (e.g. solid candy particles) is housed in the inner chamber. A solid candy member is provided on the base. The solid candy member surrounds the tubular member and includes a portion extending over the upper end of the tubular member, providing a closure for the upper end of the tubular member. The upper end portion of the solid candy member is licked and/or eaten until it is consumed and no longer closes the upper end of the tubular member. This allows the particulate candy inside the inner chamber to move through said passageway out from the inner chamber.

Preferably, the base of the top member is removably connected to the container. By way of example, a screw connection can be used for connecting the base of the top member to the container. The tubular member may be formed to include projections which function as "keys" to allow the solid candy member to interlock with the tubular member.

Preferably, the candy product includes a cap that is removably secured to the upper end of the container. When the cap is secured to the container, it extends over and surrounds the solid candy member. After the upper portion of the solid candy has been consumed, opening the passageway leading out from the inner chamber, the cap is installed on the top member. Then, the candy product is shaken to cause the particulate candy in the inner chamber to flow out through the passageway and into the cap. Once in the cap, the particulate candy can become attached on what is left of the solid candy member. Then, the person can resume consuming the "sucker" or "lollipop", this time consuming the particulate candy coating along with some more of the solid candy member.

According to an aspect of the invention, the container may be shaped to simulate the cone portion of an ice cream cone and the solid candy member may be shaped to simulate the ice cream portion of the ice cream cone. Preferably, the container is made of a see-through material so that the particulate candy in the inner chamber can be seen through the container. Preferably also, the cap is made from a see-through material so that the solid candy member and any particulate candy that is on it can be viewed from the cap.

Other object, advantages, and features of the invention will become apparent from the description of the best mode set forth below, from the drawings, from the claims and from the principles that are embodied in the specific structures that are illustrated and described.

### Brief Description of the Several Views of the Drawing

Like reference numerals are used to designate like parts throughout the several views of the drawing, and:
Fig. 1 is a pictorial view of an embodiment of the invention;
Fig. 2 is an exploded pictorial view of the embodiment shown by Fig. 1;
Fig. 3 is an axial sectional view of a plug member and a top member assembled together;
Fig. 4 is an axial sectional view of a two-part mold and a dispenser dispensing a candy substance into a cavity in the mold;
Fig. 5 is a view like Fig. 4 but showing the assembly of Fig. 3 inverted and inserted into the candy substance;
Fig. 6 is an axial sectional view of the top member and a solid candy member;
Fig. 7 is an axial sectional view of a cone shaped container with an open top showing candy particles being introduced into the container through the open top;
Fig. 8 is a view like Fig. 7 but showing the assembly of Fig. 6 connected to the top of the container;
Fig. 9 is a view like Fig. 8 but showing a cap on the top of the assembly of Fig. 8; positioned over and covering the solid candy member;
Fig. 10 is a view like Fig. 8 but showing the top of the candy member reduced so as to expose a tubular center portion of the top member;
Fig. 11 is a view like Fig. 10 but showing the cap placed over the solid candy member, such view including arrows that indicate a shaking of the container for the purpose of moving candy particles out from the container;
Fig. 12 is a view like Fig. 7 but following completion of the shaking and showing the cover removed, such view showing candy particles stuck to the solid candy member; and
Fig. 13 is a view like Fig. 12 but showing the top member and the solid candy member inverted and the candy member being inserted downwardly into the cone.

### Detailed Description of the Invention

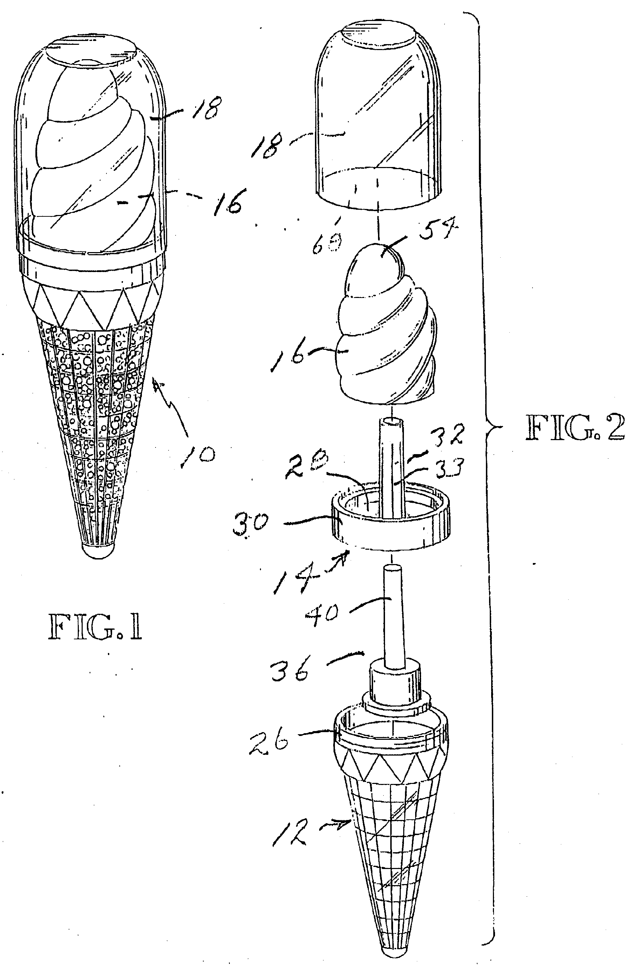

Fig.1 shows a candy product 10 that constitutes a preferred embodiment of the invention. It comprises a container 12, a top member 14, a solid candy member 16 and a cap 18. As shown by Figs. 2 and 7-13, the container 12 may be shaped to simulate the cone portion of an ice cream cone. That is, it is in the form of a cone and has a closed lower end 20 and an open upper end 22. It is formed by a sidewall 24 that increases in diameter as it extends upwardly from the lower end 20 to the upper end 22. The upper outside end portion 26 of the wall 24 is preferably threaded.

The top member 14 has a base 28, a cylindrical wall 30 extending downwardly from the outer periphery of the base 28 and a tubular member 32 that extends upwardly from the base 28. Wall 30 includes internal threads 34 that couple with the threads 26 on the housing 12. In this manner, the top member 14 is attached to the top of the container 12.

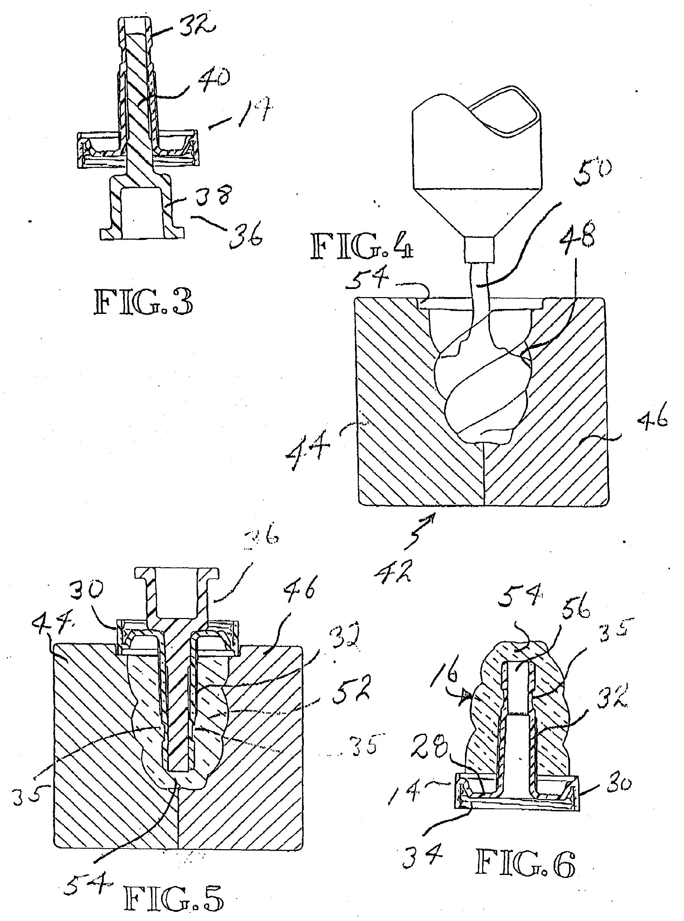

A plug 36 is used during the manufacture of the candy product 10. As shown by Figs. 2, 3, and 5, the plug 36 has a base 38 and a plug member 40. The plug member 40 is positioned to extend upwardly through the tubular member 32. It may be sized to snugly fit within the tubular member 32 so that when the plug member 36 and the top member 14 are assembled, as shown in Figs. 3 and 5, the sidewall of the tubular member 32 frictionally grips the plug member 40, holding the two members 14, 16 together. Or, the two members 34, 14 may be held together in any other suitable fashion.

Fig. 4 shows a two-part mold 42. A first part 44 is connected to a second part 46. Where they meet, the two parts 44, 46 form a cavity 48 in which a solid candy member is cast. Fig. 4 shows candy 50 in a liquid or plastic form being injected into the mold cavity 48. When a predetermined amount of the candy substance 50 is within the cavity 48, the assembly 14, 36 are inserted down into the candy. Specifically, the tubular member 32 enters the candy mass 52. The assembly 14, 16 is moved downwardly until the sidewall 30 is within a socket 54 formed in the top of mold parts 44, 46 immediately around the entrance to the mold cavity.

Fig. 5 shows that some (54) of the candy mass 16 exists between the end of tubular member 32 and the base of the mold cavity 48. After the candy mass 52 has hardened, the mold parts 44, 46 are separated. Then, the plug member 36 is removed from the tubular member 32. Then, the assembly 14, 16 is rotated to place the end portion 54 at the top. When the candy mass 52 has hardened, it becomes the solid candy member 16. As clearly shown by Fig. 6, the portion 54 of the hard candy member 16 is above the upper end 56 of the tubular member 32. Candy portion 54 forms an initial closure for the upper end of the tubular member 32.

The tubular member 32 may be provided with ribs 33 or the like that project radially outwardly from the tubular member 32 and function as "keys" for "locking" the hard candy member 16 to the tubular member 32. Instead of or in addition to the ribs or keys 33, the tubular member 32 may be formed with recesses 35 (Figs. 5 and 6). These recesses 35 receive some of the hard candy member 16 and function to secure the hard candy member 16 to the tubular member 32. Thus, both the ribs 33 and the recesses 35 may be considered to be "key" elements. Each of them forms a structural interlock between the candy member 16 and the tubular member 32.

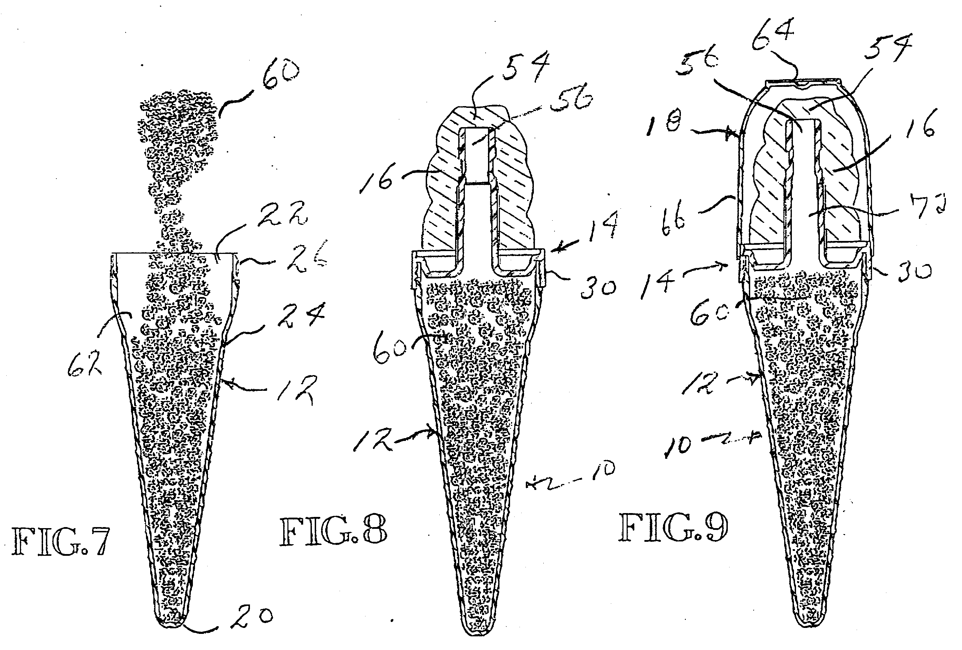

Fig. 7 shows particulate candy 60 being introduced into the inner chamber 62 inside of container 12. The candy 60 may consist of small particles of hard candy. The particles may be colored the same color, or they may be colored with two or more different colors. The candy particles may be sweet, sour or a combination of sweet and sour tastes.

After the particulate candy 60 is inside of the container 12, the top member 14 is connected to the top of the container 12. In the illustrated embodiment, this is done by screwing the cylindrical portion 30, with threads 34, onto the upper end portion of container 12, which includes threads 26. The assembly 14, 16 is tightened until the assembly 14, 16 is securely connected to the container 12. Next, the cap 18 is applied. Cap 18 may be cup-shaped and have a closed upper end 64, a cylindrical sidewall 66 and an opening 68 (Fig. 2) at its lower end. The lower end portion of the cap 18 may make a frictional fit around the outside of cylindrical wall 30. Or, another threaded connection may be provided between cap 18 and wall 30 of member 14.

Fig. 9 shows the candy product that is complete except for labels and a final protective wrapping of a clear plastic material. The container 12 is made from a see-through material so that the particulate candy 60 can be seen through the container 12. The cap 18 is made from a see-through material so that the solid candy body 16 can be seen through the cap 18. As best shown by Figs. 1, 2 and 8-12, the candy product 10 is a simulated ice cream cone. The container 12 simulates the cone portion of the ice cream cone. The hard candy member 16 simulates the ice cream portion of the simulated ice cream cone. The hard candy member 16 is given a shape common to the shape of ice cream that is dispensed out from a machine into an ice cream cone. The container 12 may be formed to include a grid-like pattern that is similar to the waffle grid that is formed on ice cream cones.

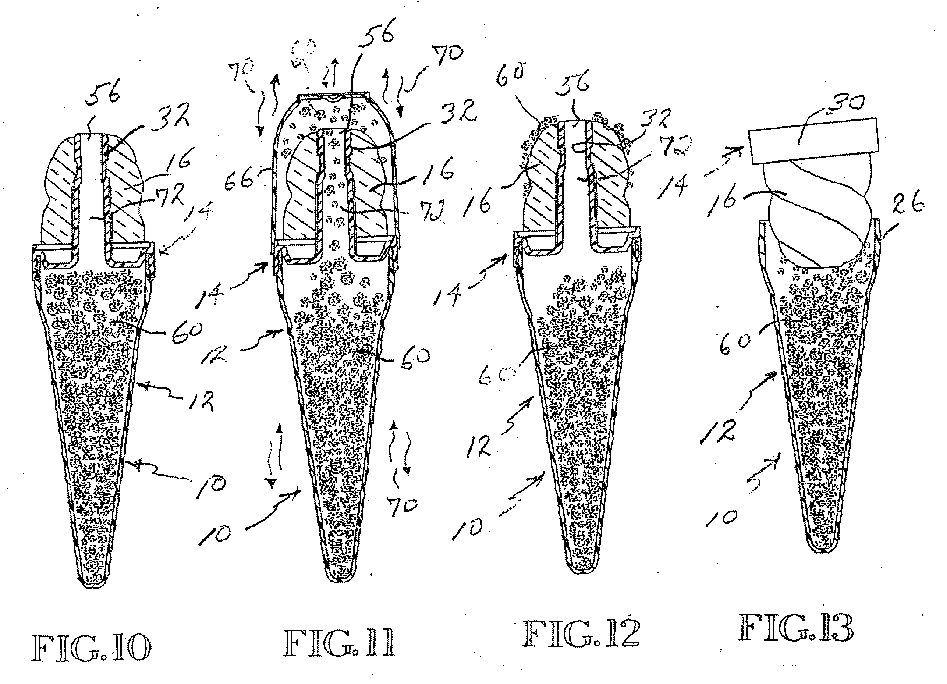

After acquiring the candy product 10, a person removes the cap 18 and licks and/or bites the solid candy member 16. Eventually, this will lead to a consumption of the upper end portion 54 of the hard candy member 16. Figs. 8 and 9 show the upper portion 54 of the hard candy member 16 providing a closure for the upper end 56 of the tubular member 32. Fig. 10 shows the upper end portion 54 consumed, uncovering the upper end 56 of the tubular member 32. When the candy product 10 is in the condition shown by Fig. 10, the person can place the end 56 in or in alignment with his or her mouth and tip the container 12 upwardly so as to cause the particulate candy 60 to move through the tubular member 32 and into that person's mouth. In this way, the person can in effect "drink" the particulate candy 60 out from the container 12.

Instead of "drinking" the candy 60 out from the container 12, the person can install the cap 66 back on the top member 14, as shown in Fig. 11. Then, the candy product can be shaken, as indicated by the arrows, some of which are designated 70. This shaking causes the particulate candy 60 to move through the passageway 72 in the tubular member 32 and into the space within the cap 66 that surrounds the solid candy member 16. Assuming that the solid candy member 16 was sucked upon or licked shortly before installing the cap 66, the outer surface of the solid candy member 16 will be sticky and the particulate candy 60 will stick to this outer surface. This is shown in Fig. 12. After some of the particulate candy 60 is picked up on the outer surface of the solid candy member 16, the cap 66 is removed, again exposing the hard candy member 16 as is shown by Fig. 12. The person can then continue licking or sucking on the hard candy body 16. This time he or she will pick up the particulate candy 60 in addition to a surface portion of the hard candy member 16.

Fig. 13 shows a second way of coating the hard candy member 16 with the particulate candy 60. The top member 14 is attached from the upper end of the container 12. It is then inverted and the hard candy member 16 is inserted down into the open top of the container 12. If the container 12 contains a sufficient amount of the candy 60, there will be direct contact between the hard candy member 16 and the candy 60. Assuming again that the hard candy member 16 has been licked and has a moist and sticky outer surface, this outer surface will pick up some of the candy 60. Then, the top member 14 can be removed from the housing 12, moved back into an upright position and then reassembled on top of the container 12. The user can then continue consuming the candy by licking or sucking on the hard candy body 16 and the candy 60 that was picked up when the hard candy member 16 was dipped into the candy 60, as shown by Fig. 13.

The illustrated embodiments are only examples of the present invention and, therefore, are non-limitive. It is to be understood that many changes in the particular structure, materials and features of the invention may be made without departing from the spirit and scope of the invention. Therefore, it is my intention that my patent rights not be limited by the particular embodiments illustrated and described herein, but rather are to be determined by the following claims, interpreted according to accepted doctrines of patent claim interpretation, including use of the doctrine of equivalents and reversal of parts.

## Claims

1. A candy product, comprising:
a container sized and shaped to be grasped by and held in a person's hand, said container having an inner chamber and an upper end portion including an upper end opening;
a top member having a base connected to the upper end portion of the container and a tubular member extending upwardly from said base and including a passageway having an upper end and a lower end that communicates with the inner chamber in said container;
a particulate candy in said inner chamber; and
a solid candy member on said base, surrounding said tubular member and including an upper portion extending over the upper end of the tubular member, providing a closure for said upper end,
wherein the upper end portion of the solid candy member can be removed by its consumption to open the internal passageway and allow the particulate candy inside the inner chamber to be moved through said passageway and out from said inner chamber.

2. The candy product of claim 1, wherein the base of the top member is removably connected to the container.

3. The candy product of claim 2, comprising a screw connection connecting the base of the top member to the container.

4. The candy product of claim 1, comprising key projections on the tubular member which interlock with the solid candy member.

5. The candy product of claim 1, further comprising a cap that is removably secured to the upper end of the container in a position wherein the cap extends over and around the solid candy member.

6. The candy product of claim 1, wherein the particulate candy comprises granular candy particles.

7. The candy product of claim 1, wherein the container is shaped to simulate the cone portion of an ice cream cone and the solid candy member is shaped to simulate the ice cream portion of the ice cream cone.

8. The candy product of claim 7, wherein the base of the top member is removably connected to the container.

9. The candy product of claim 8, comprising a screw connection connecting the base of the top member to the container.

10. The candy product of claim 7, comprising key projections on the tubular portion which interlock with the solid candy member.

11. The candy product of claim 7, further comprising a cap that is removably secured to the upper end of the container and when secured to the container extends over and around the solid candy member.

12. The candy product of claim 1, wherein the container is made of a see-through material so that the particulate candy in the inner chamber can be seen through the container.

13. The candy product of claim 12, further comprising a cap that is removably secured to the upper end of the container and when secured to the container extends over and around the solid candy member.

14. The candy product of claim 13, wherein the cap is formed from a see-through material so that the solid candy member can be viewed through the cap.

15. The candy product of claim 13, wherein the container is shaped to simulate the cone portion of an ice cream cone and the solid candy member is shaped to simulate the ice cream portion of the ice cream cone.

16. The candy product of claim 14, where the container is shaped to simulate the cone portion of an ice cream cone and the solid body member is shaped to simulate the ice cream portion of the ice cream cone.

17. The candy product of claim 12, wherein the container is shaped to simulate the cone portion of an ice cream cone and the solid candy member is shaped to simulate the ice cream portion of the ice cream cone.

18. The candy product of claim 17, further comprising a cap that is removably secured to the upper end of the container and when secured to the container extends over and around the solid candy member.

19. The candy product of claim 18, wherein the cap is formed from a see-through material so that the solid candy member can be viewed through the cap.

20. The candy product of claim 18, wherein the particulate candy comprises granular candy particles.
